# EUROPEAN PATENT SPECIFICATION

(11) **EP 2 899 285 B1**
(45) Date of publication and mention of the grant of the patent: **14.11.2018**
(21) Application number: 13839295.6
(22) Date of filing: 19.09.2013
(51) Int. Cl.: C21D 9/46, B21B 3/02, C22C 38/00, C22C 38/52, C22C 38/54, C21D 6/00, C21D 8/02, C22C 38/06, C22C 38/10, C22C 38/12, C22C 38/14

(54) **METHOD FOR MANUFACTURING MARAGING STEEL COIL**
VERFAHREN ZUR HERSTELLUNG EINES SPULE AUS MARTENSITAUSHÄRTENDEM STAHL
PROCÉDÉ DE FABRICATION D'UNE BOBINE D'ACIER MARAGING

(30) Priority: 21.09.2012 JP 2012207707
(43) Date of publication of application: 29.07.2015
(73) Proprietor: Hitachi Metals, Ltd., Tokyo 108-8224 (JP)
(72) Inventor: YOSHIDA Tomohisa, Yasugi-shi Shimane 692-8601 (JP); INABA Eikichi, Yasugi-shi Shimane 692-8601 (JP)
(74) Representative: Beetz & Partner mbB
(86) International application number: PCT/JP2013/075302
(87) International publication number: WO 2014/046181

(56) References cited:
- EP-A2- 0 894 549
- WO-A1-2012/128272
- WO-A1-2012/128272
- JP-A- S60 234 920
- JP-A- 2012 140 687
- JP-A- 2012 140 687
- US-A- 3 878 492
- US-A1- 2009 071 575

## Description

### TECHNICAL FIELD

The present invention relates to a method for manufacturing a maraging steel coil.

A method for manufacturing a maraging steel coil with the features of the preamble portion of patent claim 1 has been known from JP S60 234920 A.

### BACKGROUND ART

Since maraging steels have a tensile strength as high as about 2000 MPa, they have been used for members required to have a high strength. While the members made of the maraging steels have various configurations. Among them, the maraging steels for a continuously variable transmission (CVT) of an automotive engine etc. is manufactured by hot rolling into a steel strip followed by cold rolling into a thin sheet having a thickness of about 0. mm.

As a method for the hot rolling of the maraging steel, JP S60-234920 A, for example, discloses a method for manufacturing a cold rolled maraging steel plate. The method comprises hot-rolling a steel consisting of C≤0.02%, Si≤0.1%, Mn≤0.2%, P≤0.01%, S≤0.01%, N≤0.01%; two or more selected from 15-25% of Ni, Co≤10.0%, Mo≤7.0%, Al≤0.2% and Ti≤1.5%; and the balance of Fe and inevitable impurities, and the method includes finishing the hot rolling at not lower than 900°C in such a way that an accumulative rolling reduction of the steel at not higher than 1000°C is not more than 60% and the accumulative rolling reduction at not higher than 950°C is not more than 20%, then winding the steel at 300 to 600°C, and then cold rolling the steel followed by recrystallization-annealing and solution-treatment.

Herein, the term "coil" indicates a hot rolled material wound into a coil after the hot rolling. The hot rolled material is wound into the coil for convenience of storage and transport. The hot rolled material of the maraging steel coil typically has a thickness from 2 to 6 mm. A gross weight of one coil is typically in a range from several hundreds of kilograms to several tons.

### SUMMARY OF INVENTION

### TECHNICAL PROBLEM

As conditions for the hot rolling of the maraging steel disclosed in JP S60-234920 A, the hot rolling finishes at not lower than 900°C and the hot rolled steel is wound at 300 to 600°C to prevent uneven transformation on a run out table and thus the hot rolled steel is allowed to undergo martensitic transformation after the hot rolled steel is wound in a coil.

According to examinations made by the present inventors, it was confirmed that the wound maraging steel coil has uneven hardness, that is the steel is locally hardened, even though a temperature of the maraging steel is controlled so that the steel martensitic-transforms after the steel is wound into the coil. Then, it is necessary to perform a further step of cutting off the hardened portion. In producing a belt for continuously variable transmission parts of an automotive engine, which is required to have a high accuracy of thickness, by cold rolling, the belt material has low accuracy in the thickness since the uneven hardness of the steel directly relates to variation of workability in the cold rolling.

It is an object of the invention to provide a method for manufacturing a coil of a hot rolled maraging steel, which can suppress the localized hardness.

### SOLUTION TO PROBLEM

The invention has been made in view of the above problem.

The invention provides a method for manufacturing a maraging steel coil, including:
a step of preparing a maraging steel hot rolling raw material;
a raw material heating step of heating the raw material;
a hot rolling step of hot rolling the raw material heated by the raw material heating step; and
a winding and shower cooling step of winding the hot-rolled material obtained by the hot rolling step into a coil and shower cooling the coil, wherein the winding and shower cooling step is conducted by winding the coil while shower cooling the hot-rolled material so that a temperature of the material does not increase to a temperature at or above the Ms point, after the hot-rolled material has been cooled to a temperature below the Ms point.

Preferably, temperatures of an external peripheral surface, an internal peripheral surface, and a center part of a side surface of the coil, at a time when two minutes has passed after the winding finished, are higher than the Ms point by 50°C or higher, and the temperatures are not higher than 700°C; and that differences among the temperatures are within 300°C.

### ADVANTAGEOUS EFFECTS OF INVENTION

Since the method according to the invention can suppress localized hardness of the coil of the hot rolled maraging steel, the method can omit the step of cutting off a hardened portion of the coil and is thus excellent in cost-efficiency and productivity.

### BRIEF DESCRIPTION OF DRAWINGS

[FIG. 1] Fig. 1 is a view showing a wound coil of a maraging steel.

### DESCRIPTION OF EMBODIMENTS

The inventors searched causes of the localized hardness of the hot rolled maraging steel coil and found the following knowledges.

It is considered that the localized hardness is caused by aging effect peculiar to the maraging steel, which occurs in the structure that is cooled and martensite-transformed; and that a locally hardened portion due to the aging effect corresponds to a portion where a temperature again increases after once cooled; and that the re-rise of the temperature of the cooled portion is caused by heat transfer from the inside of the coil.

That is, the uneven hardness does not occur at a portion where a temperature monotonously decreases, while the aging effect generates and localized hardness occurs at a portion where a temperature rises again after the martensitic transformation.

The aging effect peculiar to the maraging steel is described in detail below.

The inventors took specimens from a maraging steel raw material having a representative composition: 18%Ni-9%Co-5%Mo-0.45%Ti-0.1Al-bal.Fe (by mass %) to examine an increase of hardness due to the temperature rise at a once-cooled portion. The research for the effect of the thermal recuperation was conducted by re-heating the specimens which had been subjected to the martensitic transformation and investigating a relation with a temperature and a holding time period.

The aging effect by the thermal recuperation occurs in a case where a temperature of a part of the hot rolled maraging steel material in the coil decreases below the Ms point and increases again. Thus, the specimens were held at 850°C for one hour, and they were subjected to solution treatment followed by water-cooling or air-cooling. The water-cooling was made by shower cooling on a run out table. The air-cooling was made supposing that the maraging steel material was wound in a coil after the hot rolling without cooling. All specimens had a martensitic structure and a Vickers hardness of 310HV.

The specimens were re-heated at 200°C, 300°C, 400°C and 500°C, each for 5, 10, 30 and 60 minutes to measure the increase of hardness due to the aging effect. The hardness was measured with use of a Vickers hardness meter. Table 1 shows the results. The Ms point of the maraging steel shown in table 1 is 220°C.

**[Table 1]**

| Re-heating temperature | Specimen | Hardness (HV) | | | |
|---|---|---|---|---|---|
| | | 5 minutes | 10 minutes | 30 minutes | 60 minutes |
| 200°C | Water-cooled material | 310 | 310 | 310 | 310 |
| | Air-cooled material | 310 | 310 | 310 | 310 |
| 300°C | Water-cooled material | 331 | 331 | 331 | 331 |
| | Air-cooled material | 319 | 319 | 331 | 331 |
| 400°C | Water-cooled material | 379 | 371 | 441 | 443 |
| | Air-cooled material | 364 | 364 | 427 | 443 |
| 500°C | Water-cooled material | 466 | 495 | 546 | 549 |
| | Air-cooled material | 451 | 484 | 540 | 549 |

As shown in table 1, the hardness was not increased for the specimens re-heated at 200°C which is below the Ms point. However, when the specimens were re-heated at 300°C which is above the Ms point, the hardness began to increase for the specimen held for five minutes. The effect became remarkably as the re-heating temperature was higher. When the re-heating temperature was not lower than 400°C, the hardness exceeded 350HV. The water-cooled specimens and the air-cooled specimens showed almost the same tendency although hardness was a little different between them.

From the results, it was found that the aging effect appears in a short time period by the re-heating due to thermal recuperation, after the maraging steel has been cooled to a temperature below the Ms point and the structure become the martensite. It was also found that the aging effect becomes remarkable as the re-heating temperature becomes higher and the holding time period becomes longer.

Therefore, in order to suppress the aging effect, it is necessary to prevent the temperature rise of the maraging steel to a temperature at or above the Ms point once after the steel is cooled below the Ms point when the steel is hot-rolled and then wound in a coil. If the aging effect locally appears as shown in Table 1, the maraging steel has a localized hardness, which leads to the deterioration of the rolling accuracy in a next step. That is, the aging effect of the maraging steel is sensitive to a temperature.

Based on the above knowledge, the following means are taken in the invention to suppress the localized hardness of the maraging steel coil. The details of the invention are described below.

According to the invention, a maraging steel hot rolling raw material is prepared. The raw material is produced by vacuum melting and vacuum arc re-melting to produce a steel ingot, and then the ingot is hot worked, such as hot forged, into a steel billet applicable to hot rolling. Preferably, the maraging steel used for the invention includes C: 0.15% or less, Ni: 8 to 22%, Co: 3 to 20%, Mo: 2 to 9%, Ti: 0 to 2%, Al: 2.5% or less, Cr: 0 to 4%, oxygen: below 10 ppm, and nitrogen: below 15 ppm (shown by mass %) and the balance of Fe and impurities. The steel may include optionally one or more of Mg: 0.01% or less, Ca: 0.01% or less, and B: 0.01% or less.

Next, a raw material heating step of heating the raw material is conducted. If a temperature for heating the raw material is too low in the step, hot workability in the hot rolling of the raw material deteriorates. On the other hand, if the temperature is too high, there is a possibility that a ductility of the raw material decreases. Thus, it is preferable to heat the raw material at temperatures from 1000 to 1300°C.

Next, a hot rolling step of hot rolling the heated raw material is conducted according to the invention. The hot rolling may be conducted with known rolling mills such as a tandem mill or a reversing rolling mill, although the mill is not limited.

Preferably, a hot rolling finishing temperature is controlled slightly lower in the hot rolling step. More specifically, the hot rolling finishing temperature is preferably not higher than 950°C, more preferably not higher than 900°C. If the hot rolling finishing temperature is excessively higher, temperature irregularity may generate in in the coil and thus a part of the coil is cooled below the Ms point and then thermally recuperated by residual heat retained inside the coil to a temperature at or above the Ms point, leading to age hardening.

Regarding a positional difference of the temperature irregularity, edges of the hot rolled material are tend to cool faster while a center part in a width direction of the material is tend to cool slowly.

It is noted that a preferable lower limit of the hot rolling finishing temperature is 700°C. It is because an excessive load is applied to a rolling mill if the temperature is less than 700°C.

A thickness of the hot rolled material is preferably not more than 5 mm so that the material is promptly cooled by the winding and cooling step described later. More preferably, the thickness is not more than 3 mm, and most preferably not more than 2.5 mm.

According to the invention, the hot rolled material in the hot rolling step is next wound in a coil and cooled in the winding and cooling step. The invention avoids excessive thermal recuperation in the hot rolled material after the winding and cooling step. When the temperature falls below the Ms point and thereafter rises to a temperature at or above the Ms point again by the thermal recuperation, the aging effect generates in a few minutes. Thus, it is important to prevent the thermal recuperation to a temperature at or above the Ms point after it is once cooled below the Ms point.

Therefore, it is necessary to wind the hot rolled material in a coil while cooling it to decrease the temperature thereof in order to prevent the thermal recuperation. Shower cooling is applied to cool the hot rolled material during the winding. The surface temperature of the coil is cooled by the shower cooling to a temperature not higher than e.g. 600°C after the material is wound in the coil.

As the shower cooling, the hot rolled material may be shower cooled when it is loaded on a run out table for delivered to the coiler. Alternatively, the material may be shower cooled when it is continuously coiled around a shaft.

According to the invention, it is important to control the temperature of the coil of the hot rolled material to prevent the aging effect due to the thermal recuperation, since the material is wound in the coil as being cooled so that its temperature is not increases to a temperature at or above the Ms point after it is once cooled below the Ms point.

Following two methods are available to prevent the thermal recuperation.

First one is to subject the hot rolled material in a form of the coil or before wound in the coil to forced cooling it to a temperature below the Ms point. Thereby, the whole of the coil can be surely cooled below the Ms point. However, it is impossible to adopt the method unless the equipment has an sufficient cooling capability.

Second method is to adjust the shower cooling conditions so that the hot rolled material has a temperature not lower than the Ms point when it is wound in the coil. It is suitable to measure a temperature of each position of an external peripheral surface 2, an internal peripheral surface 3, and a center portion 4 of the side surface of the coil 1 as shown in Fig. 1 to determine whether the whole hot rolled material wound in the coil has a temperature not lower than the Ms point under the adjusted shower cooling conditions. Since it is actually difficult to measure an exact temperature of the hot rolled material in the coil, the measurement is conducted at the three portions, namely, the external peripheral surface 2 and the internal peripheral surface 3 of the coil 1, which are cooled faster, and the center part 4 of the side surface of the coil 1, which is cooled slowly. Since the external peripheral surface 2 and the internal peripheral surface 3 are portions which are cooled faster, the temperatures will rise when the thermal recuperation occurs. Thus, the portions are most suitable for the temperature measurement for monitoring the thermal recuperation.

In the case of the second method, it is preferable according to the invention that each temperature of the three portions of the coil is higher than the Ms point by 50°C or higher, and the each temperature is not higher than 700°C, and that difference among the temperatures of the three portions is within 300°C, when two minutes has passed after the winding finished.

If any of the three portions has a temperature above 700°C or the temperature difference between a portion having the highest temperature and a portion having the lowest temperature is above 300°C, there will be a large temperature difference between the surface and the inside of the coil in the cooling step and uneven hardness possibly occurs between the surface and the inside. In the second winding and cooling method, the temperature decrease of the outer and internal peripheral surfaces is larger since the surfaces are exposed to an ambient air, and are thermally recuperated by a heat transferred from the center part of the coil which has highest temperature. Thereby, it is possible to decrease the temperature difference in the coil, and to subsequently cool the whole coil to the temperature below the Ms point at an almost uniform cooling speed. Therefore, even though an equipment does not have sufficient cooling capability to adopt the first method, it is possible to prevent the aging effect caused by the local thermal recuperation. Consequently, the method is economically advantageous since powerful cooling equipment is not necessary. The term "finish of winding" herein means a moment when the rear end of the hot rolled material is wound in the coil.

The coil after the winding finishes may be cooled in air (air-cooling) or with air blast.

Any appropriate method may be employed according to a own equipment as far as it can prevent the aging effect caused by the local thermal recuperation.

### EXAMPLE

The invention is described in detail with following example.

A maraging steel ingot was produced through vacuum arc re-melting with a consumable electrode which has been produced by vacuum melting. The produced maraging steel ingot was hot-forged to obtain 60 mm-thick hot roll raw materials. Table 2 shows a composition of the ingot, which has the Ms point of 220°C.

**[Table 2]**

| C | Ni | Cr | Co | Mo | Ti | Al | [O] | [N] | [Ca] | [Mg] | [B] |
|---|---|---|---|---|---|---|---|---|---|---|---|
| 0.004 | 18.54 | 0.01 | 9.33 | 5.00 | 0.47 | 0.13 | 2 | 5 | 1 | 2 | 2 |

| | | | | | | | | | | | |
|---|---|---|---|---|---|---|---|---|---|---|---|
| Note 1: Elements other than those shown above are Fe and impurities. Note 2: Unit is mass%, while elements shown in [] are indicated by ppm. | | | | | | | | | | | |

The 60 mm-thick raw materials were hot rolled. Forced cooling on a run out table was not conducted. Shower cooling was started for the hot rolled materials immediately before the materials were wound in coils, and the materials in the course of wound were shower-cooled until the winding finished. Then, the wound coils were allowed to cool in air.

Temperatures of the hot rolled materials and the coils were measured with an infrared thermography. The temperatures of the coils were 260 to 410°C immediately after the winding finished and thus the temperatures were not lower than the Ms point over the whole length of the hot rolled materials. After the coils were cooled to a temperature below the Ms point, it did not thermally recuperate and did not rise again to a temperature at or above the Ms point.

Tables 3 and 4 show: temperatures when the hot rolling finished; thicknesses of the hot rolled materials; temperatures of the coils immediately after the winding finished (after two minutes passed); and temperature changes as a time passes. Regarding the temperatures of three portions in table 3, "internal peripheral surface" and the "external peripheral surface" indicate, respectively, the internal peripheral surface 4 and the external peripheral surface 2 of the coil in Fig. 1 and at a portion around the center in its width direction. The "center part" indicates the coil center part 4 on the side surface of the coil shown in Fig. 1. The temperature measurements are broad since certain temperature differences were measured by the thermography.

The coils were unwound after cooled to take samples for hardness measurement from portions of the maraging steel strips corresponding to the "internal peripheral surface", the "external peripheral surface" and the "center part". Oxidized scale was removed from the samples, and they were polished to measure the hardness from the surface.

**[Table 3]**

| | Material-heating temperature (°C) | Hot rolling finishing temperature (°C) | Thickness after hot rolling (mm) |
|---|---|---|---|
| Sample 1 of the invention | 1200 | 750 | 2.5 |
| Sample 2 of the invention | 1200 | 755 | 2.0 |

**[Table 4]**

| | Coil temperature after 2 minutes passed from winding finish (°C) | | | Coil temperature in after 20 minutes passed from winding finish (°C) | | | Hardness (HV) | | |
|---|---|---|---|---|---|---|---|---|---|
| | Internal peripheral surface | Center part | External peripheral surface | Internal peripheral surface | Center part | External peripheral surface | Internal peripheral surface | Center part | External peripheral surface |
| Sample 1 of the invention | 360 - 410 | 510 | 460 - 520 | 400 - 430 | 460 | 380 - 410 | 331 | 329 | 329 |
| Sample 2 of the invention | 360 - 410 | 520 | 460 - 520 | 400 - 430 | 460 | 380 - 410 | 335 | 330 | 331 |

As the above, the temperature difference in the coil was decreased according to the method of the invention.

In the maraging steel coil obtained by the winding method specified in the invention, the localized aging effect and uneven hardness was not observed. Furthermore, defects of shape such as deformation were not observed.

The maraging steel coil produced by the winding method specified in the invention can have a hardness of not more than 350HV over the whole length of the coil. In particular, the hardness variation was within 20HV over the whole length, and uniform hardness was obtained.

### INDUSTRIAL APPLICABILITY

The manufacturing method of the invention is applicable to solve a problem of a hardness change during a hot rolling and winding process of materials having a transformation point of a structure as well as of the maraging steel.

### REFERENCE SIGNS LIST

- 1: coil
- 2: external peripheral surface
- 3: internal peripheral surface
- 4: center part (side surface)

## Claims

1. A method for manufacturing a maraging steel coil (1), comprising:
a step of preparing a maraging steel hot rolling raw material;
a raw material heating step of heating the raw material;
a hot rolling step of hot rolling the raw material heated by the raw material heating step; and
a winding and cooling step of winding the hot rolled material obtained by the hot rolling step into a coil (1) and cooling the coil (1),
**characterized in that** the winding and cooling step is conducted by winding the coil (1) while shower-cooling the hot-rolled material so that a temperature of the hot rolled material does not increase to a temperature at or above the Ms point, after the hot rolled material has been cooled to a temperature below the Ms point.

2. The method according to claim 1, wherein temperatures of an external peripheral surface (2), an internal peripheral surface (3), and a center part (4) of a side surface of the coil (1), at a time when two minutes has passed after the winding finished, are higher than the Ms point by 50°C or higher, and the temperatures are not higher than 700°C, and
wherein a difference among the temperatures of the external peripheral surface (2), the internal peripheral surface (3) and the center part (4) of the side surface of the coil (1) is within 300°C.

## Patentansprüche

1. Verfahren zur Herstellung einer Maraging-Stahlspule (1), umfassend:
einen Schritt der Vorbereitung eines Rohmaterials aus Maraging-Stahl zum Heißwalzen;
einen Rohmaterialerhitzungsschritt des Erhitzens des Rohmaterials;
einen Heißwalzschritt des Heißwalzens des Rohmaterials, das im Rohmaterialerhitzungsschritt erhitzt wurde; und
einen Wickel- und Kühlschritt des Wickelns des heißgewalzten Materials, das im Heißwalzschritt erhalten wurde, in eine Spule (1) und Abkühlen der Spule (1),
**dadurch gekennzeichnet, dass** der Wickel- und Kühlschritt durch Wickeln der Spule (1) durchgeführt wird, während das heißgewalzte Material durch Duschen abgekühlt wird, sodass eine Temperatur des heißgewalzten Materials nicht auf eine Temperatur auf oder über dem Ms-Punkt ansteigt, nachdem das heißgewalzte Material auf eine Temperatur unter dem Ms-Punkt abgekühlt wurde.

2. Verfahren nach Anspruch 1, wobei Temperaturen einer äußeren peripheren Oberfläche (2), einer inneren peripheren Oberfläche (3) und eines Mittelteils (4) einer seitlichen Oberflächen der Spule (1) zu einem Zeitpunkt, zu dem zwei Minuten vergangen sind, nachdem das Wickeln abgeschlossen ist, um 50 °C oder mehr über dem Ms-Punkt liegen und die Temperaturen nicht über 700 °C liegen und wobei eine Differenz zwischen den Temperaturen der äußeren peripheren Oberfläche (2), der inneren peripheren Oberfläche (3) und des Mittelteils (4) der Seitenfläche der Spule (1) unter 300 °C liegt.

## Revendications

1. Procédé pour fabriquer une bobine en acier maraging (1), comprenant :
une étape consistant à préparer une matière première d'acier maraging pour laminage à chaud ;
une étape de chauffage de la matière première consistant à chauffer la matière première ;
une étape de laminage à chaud consistant à laminer à chaud la matière première chauffée par l'étape de chauffage de la matière première ; et
une étape d'enroulement et de refroidissement consistant à enrouler la matière première chaude obtenue par l'étape de laminage à chaud en une bobine (1) et à refroidir la bobine (1) ;
**caractérisé en ce que** l'étape d'enroulement et de refroidissement est mise en oeuvre en enroulant la bobine (1) tout en refroidissant par douche la matière laminée à chaud de sorte qu'une température de la matière laminée à chaud n'augmente pas à une température à ou au-dessus du point Ms, après avoir refroidi la matière laminée à chaud à une température en dessous du point Ms.

2. Procédé selon la revendication 1, dans lequel les températures d'une surface périphérique externe (2), d'une surface périphérique interne (3) et d'une partie centrale (4) d'une surface latérale de la bobine (1), au moment où deux minutes sont passées après la fin de l'enroulement, sont supérieures au point Ms de 50 °C ou plus, et les températures ne sont pas supérieures à 700 °C, et
dans lequel une différence entre les températures de la surface périphérique externe (2), de la surface périphérique interne (3) et de la partie centrale (4) de la surface latérale de la bobine (1) est dans les 300 °C.
